# EUROPEAN PATENT APPLICATION

(11) **EP 2 884 432 A1**
(43) Date of publication of application: **17.06.2015**
(21) Application number: 13196622.8
(22) Date of filing: 11.12.2013
(51) Int. Cl.: G06N 5/00, G06F 11/22, G06Q 10/04

(54) **Method for the generation of test cases for object-oriented product configurators**

(71) Applicant: Siemens AG Österreich, 1210 Wien (AT)
(72) Inventor: Schenner, Gottfried, 1200 Wien (AT); Falkner, Andreas, 1140 Wien (AT)
(74) Representative: Maier, Daniel Oliver

(57) **Abstract**

Method for the generation of test cases for object-oriented product configurators

The invention is related to a method for the generation of test cases for object-oriented programmed product configurators by use of a computer with following steps:
- translating the knowledge base of the product configurator from an object-oriented program into a program language on basis of answer set programming;
- define the constraints to be tested with a program language on basis of answer set programming;
- generate positive and negative test cases for the constraints by use of an answer set programming solver
- translate back the test cases into the object-oriented program;
- integrate the test cases into the testing framework of the configurator.

## Description

The invention is related to a method for the generation of test cases for object-oriented product configurators by use of a computer.

Product configurators are software systems, which enable users to configure technical systems or services.

They are one of the most successfully applied Artificial Intelligence technologies and used for example in the automotive industry, the telecommunication industry, the computer industry, and especially in cases, where complex technical systems have to be configured.

The core tasks of product configurators are to check the consistency of user requirements with the knowledge base, to guide the user to find the solution and to translate the configuration results into bill of materials.

Configuration knowledge bases are composed of a formal description of the structure of the product and further constraints restricting the possible feature and component combinations. With other words, constraints describe the requirements, the final product must satisfy.

To test the proper function of a constraint based configurators, every constraint must be tested. To do this, the tester has to provide positive and negative test cases for the constraint. This causes considerable efforts.

In order to reduce man-power for testing, automatic test case generation tools have been developed for standard software systems. They use model based techniques as Unified Modeling Language UML, a standardized (ISO/IEC 19501:2005), general-purpose modeling language in the field of software engineering to describe the expected dynamical behavior of software. From that description, test cases are generated for the dynamic behavior of programs.

It is an object of the invention to provide an enhanced method for the testing of product configurators.

According to the invention, this object is achieved with a method for the generation of test cases for object-oriented product configurators by use of a computer with following steps:
- translating the knowledge base of the product configurator from an object-oriented program into a program language on basis of answer set programming;
- define the constraints to be tested with a program language on basis of answer set programming;
- generate positive and negative test cases for the constraints by use of an answer set programming solver
- translate back the test cases into the object-oriented program;
- integrate the test cases into the testing framework of the configurator.

Answer set programming is a form of declarative programming oriented towards difficult search problems. It is based on the stable model (answer set) semantics of logic programming.

In answer set programming, search problems are reduced to computing stable models, and answer set solvers - programs for generating stable models - are used to perform search. The computational process employed in the design of many answer set solvers is an enhancement of the Davis-Putnam-Logemann-Loveland (DPLL) algorithm and, in principle, it always terminates (unlike Prolog query evaluation, which may lead to an infinite loop).

In a more general sense, answer set programming includes all applications of answer sets to knowledge representation and the use of Prolog-style query evaluation for solving problems arising in these applications.

According to the invention, the constraints of the product configurator are implemented in an object-oriented programming language as well as in a logic programming language on basis on basis of answer set programming. With this approach, conceptual errors can be detected. Additionally, the generation of test cases requires less effort than the known methods.

A preferred embodiment of the invention will be described with reference to the drawing.

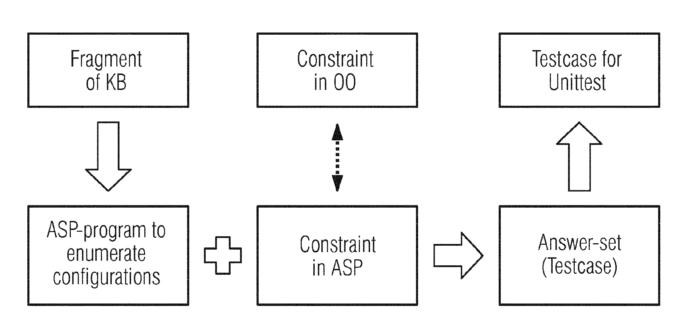

Fig.1 shows a schematic flowchart of the method.

The invention is related to product configurators, which are programmed in an object-oriented programming language as for example JAVA.

In a first step the knowledge base of the product configurator will be translated from the original object-oriented program into a program language on basis of answer set programming, a form of logic programming, for example Potassco.

In a second step, the constraints will be defined with the answer set programming language. This definition happens independently form the definition of the constraints in the object-oriented programming language.

In a next step positive and negative test cases for the constraints will be generated by use of an answer set programming solver.

The test cases generated in such kind, will be translated back into object-oriented programming language as for example JAVA.

The translated test cases will be integrated into the testing framework of the configurator.

## Claims

1. Method for the generation of test cases for object-oriented programmed product configurators by use of a computer with following steps:
- translating the knowledge base of the product configurator from an object-oriented program into a program language on basis of answer set programming;
- define the constraints to be tested with a program language on basis of answer set programming;
- generate positive and negative test cases for the constraints by use of an answer set programming solver
- translate back the test cases into the object-oriented program;
- integrate the test cases into the testing framework of the configurator.
